**Europäisches Patentamt**

**European Patent Office**

**Office européen des brevets**

(19)

(11) Veröffentlichungsnummer : **0 150 367 B1**

(12) **EUROPÄISCHE PATENTSCHRIFT**

(45) Veröffentlichungstag der Patentschrift :
19.08.87

(51) Int. Cl.⁴ : **G 06 K 11/06**

(21) Anmeldenummer : **84115087.3**

(22) Anmeldetag : **10.12.84**

(54) **Bedieneinheit für Datensichtgeräte.**

(30) Priorität : **11.01.84 DE 3400755**

(43) Veröffentlichungstag der Anmeldung :
**07.08.85 Patentblatt 85/32**

(45) Bekanntmachung des Hinweises auf die Patenterteilung : **19.08.87 Patentblatt 87/34**

(84) Benannte Vertragsstaaten :
**DE FR IT NL SE**

(56) Entgegenhaltungen :
**DE-U- 8 319 105**
**US-A- 4 395 134**

(73) Patentinhaber : **Siemens Aktiengesellschaft Berlin und München**
**Wittelsbacherplatz 2**
**D-8000 München 2 (DE)**

(72) Erfinder : **Walsdorf, Karl-Heinz, Dipl.-Ing.**
**Im Beckener 1**
**D-7517 Waldbronn (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Bedieneinheit für Datensichtgeräte gemäß dem Oberbegriff des Anspruchs 1.

Zu den gebräuchlichsten Bedienelementen für Datensichtgeräte gehören Lichtgriffel und Steuerknüppel (NTZ-Report 15 « Datensichtgeräte », VDE-Verlag). Während mit dem Lichtgriffel unmittelbar einzelne Bildpunkte oder -felder auf dem Bildschirm angewählt und damit deren Koordinaten in die Sichtgerätesteuerung eingegeben werden, kann durch Auslenken des Steuerknüppels eine Marke über den Bildschirm zu den anzuwählenden Bildpunkten geschoben und die Koordinaten der Marke eingegeben werden. Auch kann in dem Falle, daß auf dem Bildschirm nur ein Teil eines Großbildes dargestellt wird, dieses Großbild gewissermaßen hinter dem Bildschirm bewegt werden, was als Rollen des Bildes bezeichnet wird. Während also der Lichtgriffel besonders zum Anwählen einzelner Bildpunkte geeignet ist, wird der Steuerknüppel bevorzugt zum kontinuierlichen Verschieben von Marken oder zum Bildrollen eingesetzt. Es sind daher häufig beide Bedienelemente gleichzeitig an ein Sichtgerät angeschlossen. Hinzu kann noch eine Bedientastatur kommen. Diese Vielzahl von einzelnen Bedienelementen an einem Arbeitsplatz ist im allgemeinen sehr störend. Aus dem DE-GM 83 19 105 ist ein Datensichtgerät bekannt, das in seiner Frontseite eine Ablage für einen Lichtgriffel enthält. Diese Ablage ist rohrförmig, ragt durch die Frontplatte des Sichtgerätes und ist in einem Kugelgelenk gelagert. Damit kann der Lichtgriffel zwar abgelegt werden, die Anzahl der am Bedienplatz sichtbaren Bedienelemente wird jedoch nicht verringert.

Der vorliegenden Erfindung liegt demgemäß die Aufgabe zugrunde, die Anzahl der Einzelbedienelemente eines Bedienplatzes zusammenzufassen, so daß der Bedienplatz übersichtlicher gestaltet werden kann.

Erfindungsgemäß wird diese Aufgabe mit dem im kennzeichnenden Teil des Anspruchs 1 angegebenen Merkmal gelöst.

Die Halterung ist so zu lagern, daß, wenn der Lichtgriffel in sie gesteckt ist, dieser wie die bekannten Steuerknüppel bedient werden kann, d. h., daß er, ausgehend von einer Nullage, in der senkrecht zur Achse der Halterung liegenden Ebene frei bewegt werden kann und daß dabei Signale abgegeben werden, die das Verschieben einer Marke oder das Rollen eines Bildes bewirken. Eine solche Lagerung und die Anordnung zum Umsetzen der Steuerknüppelbewegung in elektrische Signale können wie bei den bekannten Steuerknüppeln ausgeführt sein.

Damit die Steuerknüppelfunktion nur dann ausgeübt werden kann, wenn der Lichtgriffel außer Betrieb ist, enthält die Halterung vorteilhaft einen Fotodetektor, der bei in die Halterung gestecktem Lichtgriffel von dessen Lichtquelle beleuchtet ist und der einen Umschalter steuert, derart, daß bei eingestecktem Lichtgriffel die Signaleingabe in das Datensichtgerät vom Steuerknüppel freigegeben und bei entnommenem Lichtgriffel gesperrt ist. Das Umschalten von Lichtgriffel- auf Steuerknüppelbetrieb und umgekehrt geschieht also einfach dadurch, daß der Lichtgriffel in die Halterung gesteckt wird. Mit der Umschaltung auf die beiden verschiedenen Betriebsmittel kann gleichzeitig auch die Funktion von Schaltern umgeschaltet werden, die dann entweder für den Lichtgriffelbetrieb oder für den Steuerknüppelbetrieb erforderlich sind.

Bekannte Steuerknüppel haben an ihrem Ende eine Drucktaste, durch deren Betätigen die Geschwindigkeit, mit der die Marke verschoben oder das Bild gerollt wird, verändert werden kann. Lichtgriffel haben in ihrer Spitze einen Schalter, der bewirkt, daß bei Aufsetzen des Lichtgriffels auf den Bildschirm und dem dabei entstehenden axialen Druck die Koordinateneingabe erfolgt. Eine Weiterbildung der Erfindung besteht darin, diesen im Lichtgriffel enthaltenen Schalter bei in die Halterung eingestecktem Lichtgriffel für die Umschaltung der Geschwindigkeit zu verwenden, mit der in der Steuerknüppelbetriebsart die Marke über den Bildschirm verschoben oder das Bild gerollt wird. Selbstverständlich kann das Umschalten der Geschwindigkeit auch von einem Drucksensor gesteuert sein, der in der Halterung vorgesehen ist und der bei axialem Druck auf die Halterung ein Steuersignal abgibt. Mit diesem Steuersignal können selbstverständlich auch andere Funktionen des Steuerknüppels verändert werden.

Besonders vorteilhaft ist es, die Halterung in der Frontseite des Sichtgerätes anzuordnen. Dadurch ergibt sich ein besonders übersichtlicher Bedienplatz. Hierzu kann in der Frontseite eine Öffnung vorgesehen sein, durch welche die Halterung ragt. Die Lagerung der Halterung mit den elektromechanischen Bauteilen zur Aufnahme der Auslenkung der Halterung aus der Ruhelage ist dann hinter der Frontseite des Sichtgerätes untergebracht. Zweckmäßig ist die Halterung, für Rechts- wie Linkshänder ergonomisch günstig, in der Mitte der Frontseite unterhalb des Bildschirms angeordnet.

Anhand der Zeichnungen, in denen ein Ausführungsbeispiel dargestellt ist, werden im folgenden die Erfindung sowie Weiterbildungen und Vorteile näher beschrieben und erläutert.

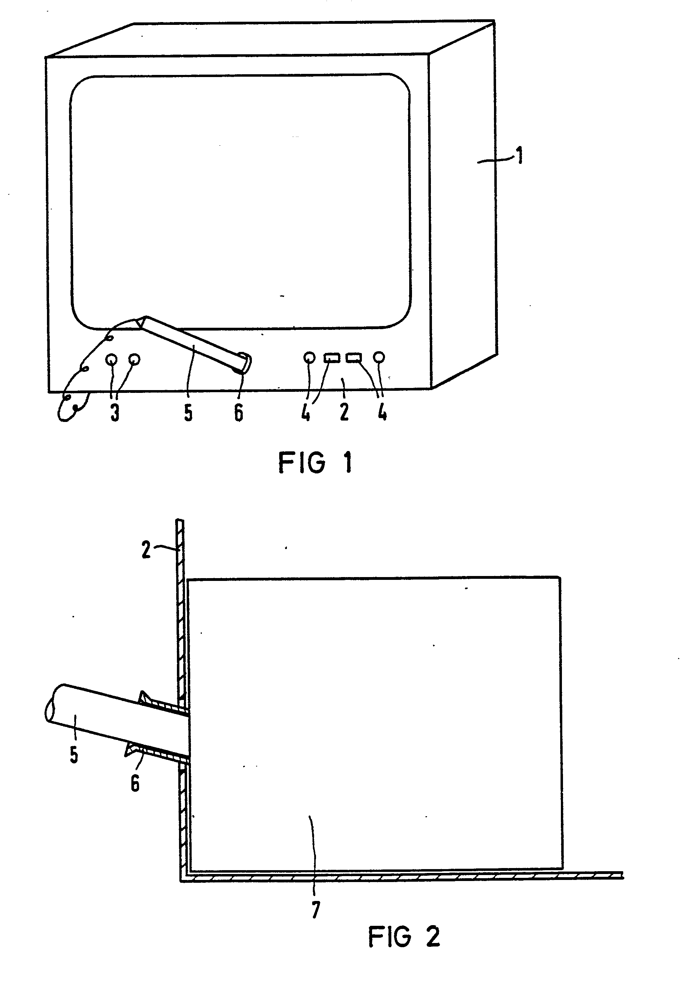

In Figur 1 ist mit 1 ein Sichtgerät bezeichnet, das mittels eines Lichtgriffels und eines Steuerknüppels bedient werden soll. In einem unteren Bereich der Frontplatte 2 des Sichtgerätes sind Schalter und Einstellelemente 3, 4 enthalten. Durch ein etwa in der Mitte angebrachtes Loch in der Frontplatte ragt eine Halterung 6 für einen Lichtgriffel 5. In Figur 2 ist dies näher veranschaulicht. Die Halterung 6 ist mit einer elektromechanischen Aufnehmereinheit 7 verbunden, die den bekannten Einheiten von Steuerknüppeln zur Bedienung von Sichtgeräten entspricht. Demgemäß ist die Halterung 6 in bekannter Weise gelenkig gelagert, und die Einheit 7 enthält Aufnehmer, welche der Auslenkung der Halterung 6 aus einer Nullage entsprechende Signale liefert. Diese Aufnehmer können Potentiometer, Codierscheiben oder im einfachsten Falle je Koordinatenrichtung ein Schalter der insgesamt vier Schalter sein. Zum Auslenken der Halterung 6 wird der Lichtgriffel 5 eingesteckt. Dieser bildet dann das Bedienelement des Steuerknüppels. Die Öffnung in der Frontplatte 2 des Sichtgerätes muß so groß sein, daß die Halterung 6 ausreichend weit ausgelenkt werden kann.

Lichtgriffel enthalten im allgemeinen eine Lichtquelle, mit der beim Aufsetzen des Lichtgriffels auf den Bildschirm eine Marke auf diesen projiziert wird, damit das angewählte Bildelement erkannt werden kann. Gemäß einer Weiterbildung der Erfindung wird diese Lichtquelle zum Einschalten der Steuerknüppelfunktion verwendet, indem am Boden der Halterung 6 ein Fotoelement angebracht ist. Nur dann, wenn dieses von der Lichtquelle des Lichtgriffels beleuchtet ist, d. h. der Lichtgriffel in die Halterung 6 gesteckt ist, ist die Steuerknüppelfunktion freigegeben. Gleichzeitig kann mit dem vom Fotoelement abgegebenen Signal die Funktion eines Teils der Einstell- und Bedienelemente 3, 4 umgeschaltet werden, soweit diese die Lichtgriffel- oder die Steuerknüppelfunktion betreffen. Schließlich kann die Einheit 7 einen Drucksensor, z. B. einen Schalter, enthalten, der auf einen Druck anspricht, der in axialer Richtung auf den Lichtgriffel 5 ausgeübt wird. Er kann daher durch Eindrücken des Lichtgriffels 5 in die Halterung 6 betätigt werden, z. B. um das Verschieben einer Schreibmarke auf dem Bildschirm zu beschleunigen.

## Patentansprüche

1. Bedieneinheit für Datensichtgeräte mit einem Lichtgriffel (5) und einer rohrförmigen Halterung (6) für den Lichtgriffel, die senkrecht zu ihrer Achse schwenkbar ist und in deren vorderes Ende der Lichtgriffel einsteckbar ist, dadurch gekennzeichnet, daß die Halterung (6) mit einer an sich bekannten Aufnehmereinheit (7) für Steuerknüppel verbunden ist.

2. Bedieneinheit nach Anspruch 1, dadurch gekennzeichnet, daß der Lichtgriffel (5) eine nach vorn strahlende Lichtquelle enthält, daß die Halterung (6) einen Fotodetektor aufweist, der bei in die Halterung gestecktem Lichtgriffel (5) von dessen Lichtquelle beleuchtet ist und der einen Umschalter steuert, derart, daß bei eingestecktem Lichtgriffel die Signaleingabe in das Datensichtgerät vom Steuerknüppel freigegeben ist und bei entnommenem Lichtgriffel die Signaleingabe vom Steuerknüppel gesperrt ist.

3. Bedieneinheit nach Anspruch 1 oder 2, dadurch gekennzeichnet, daß die Halterung (6) einen Drucksensor aufweist, der bei axialem Druck auf die Halterung (6) ein Signal abgibt, das eine Änderung der Funktion des Steuerknüppels bewirkt.

4. Bedieneinheit nach einem der Ansprüche 1 bis 3, dadurch gekennzeichnet, daß die Aufnehmereinheit (7) hinter der Frontplatte (2) eines Sichtgerätes angeordnet ist und die Halterung (6) durch ein Loch in der Frontplatte (2) ragt oder mit dem Lichtgriffel (5) zugänglich ist.

5. Bedieneinheit nach Anspruch 4, dadurch gekennzeichnet, daß die Halterung (6) in der Mitte der Frontplatte (2) an deren unterem Rand angebracht ist.

## Claims

1. A control unit for VDUs comprising a light pen with a tubular holder pivotable at right angles to its axis, into the front end of which the light pen can be inserted, characterised in that the holder (6) is connected to a sensor (7), known per se, for joysticks.

2. A control unit as claimed in Claim 1, characterised in that the light pen (5) contains a light source which emits light in the forward direction, that the holder (6) includes a photo-detector which is illuminated by this light source when the light pen (5) is inserted into the holder, and which controls a change-over switch such that when the light pen is inserted the input of signals into the VDU from the joystick is released, and when the light pen is removed the signal input from the joystick is blocked.

3. A control unit as claimed in Claim 1 or 2, characterised in that the holder (6) comprises a pressure sensor which emits a signal resulting in a change in the function of the joystick when axial pressure is applied to the holder (6).

4. A control unit as claimed in one of Claims 1 to 3, characterised in that the sensor (7) is arranged behind the front panel (2) of a VDU, and the holder (6) projects through an opening in the front panel (2) or is accessible via the light pen (5).

5. A control unit as claimed in Claim 4, characterised in that the holder (6) is arranged in the centre of the front panel (2) at the lower edge thereof.

## Revendications

1. Unité de commande pour des appareils de visualisation de données comportant un photostyle et un support tubulaire destiné à supporter le photostyle et qui peut pivoter perpendiculairement à son axe et dans l'extrémité avant duquel un photostyle peut être enfiché, caractérisée par le fait que le support (6) est relié à une unité (7), connue en soi, de réception pour un levier de commande.

2. Unité de commande suivant la revendication 1, caractérisée par le fait que le photostyle (5) contient une source de lumière émettant son rayonnement vers l'avant, que le support (6) contient un photodétecteur qui, lorsque le photostyle (5) est inséré dans le support, est éclairé par la source de lumière de ce photostyle et commande un interrupteur de telle sorte que, lorsque le photostyle est à l'état enfiché, l'introduction d'un signal dans l'appareil de visualisation de données par le levier de commande est autorisé et que, lorsque le photostyle est prélevé, l'introduction du signal par le levier de commande est bloquée.

3. Unité de commande suivant la revendication 1 ou 2, caractérisée par le fait que le support (6) comporte un capteur de pression qui, dans le cas d'une pression axiale appliquée au support (6), délivre un signal déclenchant une modification de la fonction du levier de commande.

4. Unité de commande suivant l'une des revendications 1 à 3, caractérisée par le fait que l'unité de réception (16) est disposée derrière la plaque avant (2) d'un appareil de visualisation et que le support (6) pénètre dans un trou ménagé dans la plaque avant (2) ou est accessible à l'aide du photostyle (5).

5. Unité de commande suivant la revendication 4, caractérisée par le fait que le support (6) est disposé au milieu de la plaque avant (2), au niveau du bord inférieur de cette dernière.

FIG 1

FIG 2